# EUROPEAN PATENT APPLICATION

(11) **EP 2 955 779 A1**
(43) Date of publication of application: **16.12.2015**
(21) Application number: 14171742.1
(22) Date of filing: 10.06.2014
(51) Int. Cl.: H01M 8/04

(54) **Cold idle operation of SOFC system**

(71) Applicant: Haldor Topsøe A/S, 2800 Kgs. Lyngby (DK)
(72) Inventor: Bang-Møller, Christian, 2800 Kgs. Lyngby (DK); Weineisen, Henrik Franz, 2800 Kgs. Lyngby (DK); Noes, Jesper, 2800 Kgs. Lyngby (DK); Weichel, Steen, 2970 Hørsholm (DK)

(57) **Abstract**

Cold idle or stand-by operation of an SOFC system at reduced stack temperatures keeps the system ready for operation but reduces stack degradation rate and fuel consumption.

## Description

### FIELD OF THE INVENTION

The invention relates to cold idle operation or stand by operation of a solid oxide fuel cell (SOFC) system, in particular a lowered temperature region cold idle or stand by operation which lowers the energy consumption of the SOFC system and lowers the degradation rate of the SOFC stack, but maintains the SOFC system ready for operation.

### BACKGROUND OF THE INVENTION

A Solid Oxide Fuel Cell (SOFC) comprises a solid electrolyte that enables the conduction of oxygen ions, a cathode where oxygen is reduced to oxygen ions and an anode where hydrogen is oxidised. The overall reaction in an SOFC is that hydrogen and oxygen electrochemically react to produce electricity, heat and water. In order to produce the required hydrogen, the anode normally possesses catalytic activity for the steam reforming of hydrocarbons, particularly natural gas, whereby hydrogen, carbon dioxide and carbon monoxide are generated. Reforming of methane, the main component of natural gas, can be described by the following reactions:

CH₄ + H₂O → CO + 3H₂ (steam reforming)

CH₄ + CO₂ **→** 2CO + 2H₂ (dry reforming)

CO + H₂O **→** CO₂ + H₂ (water-gas-shift)

During operation an oxidant such as air is supplied to the solid oxide fuel cell in the cathode region. Fuel such as hydrogen is supplied in the anode region of the fuel cell. Alternatively, a hydrocarbon fuel such as methane is supplied in the anode region, where it is converted to hydrogen and carbon oxides by the above reactions. Hydrogen passes through the porous anode and reacts at the anode/- electrolyte interface with oxygen ions generated on the cathode side that have diffused through the electrolyte. Oxygen ions are created in the cathode side with an input of electrons from the external electrical circuit of the cell.

To increase voltage, several cell units are assembled to form a stack and are linked together by interconnects. Interconnects serve as a gas barrier to separate the anode (fuel) and cathode (air/oxygen) sides of adjacent cell units, and at the same time they enable current conduction between the adjacent cells, i.e. between an anode of one cell with a surplus of electrons and a cathode of a neighbouring cell needing electrons for the reduction process. Further, interconnects are normally provided with a plurality of flow paths for the passage of fuel gas on one side of the interconnect and oxidant gas on the opposite side.

The way the anode and cathode gas flows are distributed in an SOFC stack is by having a common manifold for each of the two process gasses. The manifolds can either be internal or external. The manifolds supply process gasses to the individual layers in the SOFC stack by the means of channels to each layer. The channels are normally situated in one layer of the repeating elements which are comprised in the SOFC stack, i.e. in the spacers or in the interconnect.

When operating an SOFC system in a transient environment (e.g., a household and/or a Smart Grid), idling of the SOFC system can be relevant in periods of low consumer demands and low electricity prices. Idling is here defined as the situation where the SOFC stack(s) only produce(s) power to keep the SOFC system running (i.e. approx. 10% load), i.e., without any power export, but idling keeps the SOFC system ready for sudden power export needs. This is especially relevant in load-following operation and when installed in a Smart Grid.

Additionally, heat losses can become relatively high compared to the heat generated in the SOFC stack(s) when operating at low load, thus additional heat might need to be generated in an afterburner/separate burner or elsewhere to compensate for the heat losses in idle operation. E.g., this can be done by increasing the fuel flow and lowering the fuel utilization (FU) of the SOFC stack(s), thus combusting more fuel in the afterburner and thereby heating up the SOFC stack(s) via an air flow preheated by the burner exhaust. Operating at higher fuel flow and lower FU to compensate for the heat losses from the stack in idle operation (and keep the desired stack operating temperature) results in higher fuel consumption. At idling, the electrical efficiency is not important, but the fuel consumption to keep the SOFC system idling is.

The lifetime of an SOFC stack is determined by its degradation rate and degradation is a thermally activated process. Especially oxide scale growth on the metallic interconnects is temperature dependent - higher stack temperature results in faster oxide scale growth. Oxide scale growth degrades the stack by permanently increasing the ASR (area specific resistance), thus decreasing the lifetime.

US20050106429 discloses a load following solid oxide fuel cell system. Embodiments of the disclosure include solid oxide and molten carbonate fuel cell systems incorporating gas separation apparati facilitating the recycle of hydrogen fuel from fuel cell anode exhaust for supply to the fuel cell anode inlet, such systems capable of improved power densities and efficiencies of operation. Further embodiments of the disclosure include solid oxide and molten carbonate fuel cell systems incorporating inventive combinations of anode materials conductive to combination with enriched hydrogen fuel. Other embodiments of the disclosure include gas separation apparati for providing enriched oxygen feed to the cathode inlet of solid oxide and molten carbonate fuel cells. It is describe how to maintain normal working stack temperature by using the burner. Additionally, it is described how to lower stack heat loss and increase ASR by reducing the air flow (i.e., lower oxygen partial pressure). This is not the same as the idea behind "cold idle", which uses lower stack temperature and reduced degradation rate is only obtained by lower stack temperature and not lower air flow.

US 6093500 describes how to go from one state of operation to another (e.g., start-up and shutdown) without damaging the stack. The patent focus on a method to go from a normal state of operation at a normal operating temperature and load to a state of operation at a lower temperature and lower load. This is done via an intermediate load and temperature, which are named "idle load" and "transition temperature", respectively. In this case, idle has nothing to do with operating the system with no power export.

US2003113601 describes a fuel cell system that includes a control system for regulating the power produced by the fuel cell system. The fuel cell system includes a fuel cell stack adapted to produce electrical power from a feed. In some embodiments, the fuel cell system includes a fuel processing assembly adapted to produce the feed for the fuel cell stack from one or more feed stocks. The control system regulates the power produced by the fuel cell system to prevent damage to, and/or failure of, the system.

US2006093880 discloses a fuel cell system and an idle stop controlling method for the fuel cell system. The fuel cell system includes: a fuel gas supply means for supplying fuel gas; an oxidant gas supply means for supplying oxidant gas; a fuel cell to which the fuel gas and the oxidant gas are supplied for generation of electricity; an idle stop means for stopping generation of electricity by the fuel cell to perform idle stop; and an unstable state detection means for detecting whether the generation of electricity by the fuel cell is unstable. If the unstable state detection means detects that generation of electricity by the fuel cell is unstable, idle stop by the idle stop means is prohibited so that the fuel cell continues to generate electricity.

US2003031899 shows a method and apparatus for changing the state of operation of a fuel cell, such as starting the fuel cell up or shutting the fuel cell down, are disclosed. An idle load is applied to the fuel cell when the cell temperature is between about normal operating temperature and a transition temperature, and fuel and oxidizer are supplied to the fuel cell commensurate with the power delivered to the idle load. Below the transition temperature, purging/passivation procedures known in the art can be followed, and an open or dummy load applied to the fuel cell. At normal operating temperature or above a service load is applied to the fuel cell.

None of the above described known art provides a simple, efficient and economical solution to the above described problems.

With reference to the above listed considerations, there is a need for a method of operating an SOFC system in a cold idle or stand-by state, where the stack degradation rate is lowered, thus longer lifetime is obtained; where lower heat loss to the surroundings and lower fuel consumption are obtained; and where higher internal resistance (ASR) ensures more heat generation in the SOFC stack, making it easier to keep the SOFC stack at the desired temperature region is also obtained.

These and other objects are achieved by the invention as described below.

### SUMMARY OF THE INVENTION

By lowering the temperature of the SOFC stack when idling ("cold idle") or in stand-by, the above advantages are achieved. In an embodiment of the invention a process for idling or stand-by operation of a Solid Oxide Fuel Cell (SOFC) system is described. The SOFC system comprises at least one assembled SOFC stack, and the stack comprises a plurality of solid oxide fuel cells. The fuel cells are stacked upon each other to form the stack. From a state of normal operation at an operating temperature, the process comprises the step of lowering the operation temperature of the SOFC stack to a cold idle temperature region below the operation temperature. By temperature region is understood that the cold idle or stand-by according to the invention can take place at more than one specific temperature, within a temperature range or region. Also it is noted that the temperature of each cell and between the different cells in the cell stack can vary, therefore the temperature region of the stack is understood as the average temperature. The cold idle temperature region is the temperature region where the SOFC system consumes sufficient power to keep the SOFC system running, but at a temperature lower than the operation temperature. When the temperature of the stack is lowered to the cold idle temperature region, the internal resistance of the stack increases. This means that a higher share (than in operation mode) of the chemical energy in the incoming fuel is allocated to the stack in the form of heat. The SOFC system is therefore kept ready for power export, even though the fuel consumption is lowered as compared to operation mode and as compared to idle or stand-by operation at normal operation temperature of the SOFC stack. A further advantage of the lowered temperature of the stack is that the stack degradation rate is also lowered, an advantage especially in SOFC systems experiencing many stand-by periods.

### Features of the invention.

1. Process for idling or stand-by operation of a Solid Oxide Fuel Cell (SOFC) system comprising at least one assembled (SOFC) stack comprising a plurality of solid oxide fuel cells, the process comprising the step of -
   - from a state of operation, lowering the operation temperature of the SOFC stack to a cold idle temperature region below the operation temperature, wherein the cold idle temperature region is a temperature region where the SOFC system consumes sufficient power to keep the SOFC system running and the internal resistance of the stack is increased, thereby keeping the SOFC system ready for power export and lowering the fuel consumption and stack degradation rate.
2. Process according to feature 1, wherein the power load of the SOFC stack is reduced to between 10% and 30% of the operation load.
3. Process according to feature 1, wherein the power load of the SOFC stack is reduced to between 5% and 40% of the operation load.
4. Process according to feature 1, wherein the average cold idle temperature region of the stack is at least 50°C below the operation temperature, preferably at least 100°C below the operation temperature.
5. Process according to feature 1, wherein the average cold idle temperature region of the stack is between 400°C and 650°C.
6. Process according to feature 1, wherein the average cold idle temperature region of the stack is between 400°C and 600°C.
7. Process according to any of the preceding features, wherein the average cold idle temperature region of the SOFC stack is between 550°C and 600°C and the load of the SOFC is between 20% and 40% of the operation load.
8. Process according to any of the preceding features, wherein the SOFC system further comprises an afterburner in fluid connection to a cathode gas exiting the stack and a heat exchanger in fluid connection to the gas exiting the afterburner and in heat exchange connection to a cathode gas entering the stack, wherein said afterburner heats the cathode gas entering the stack so the stack is heated by the cathode gas entering the stack.
9. Process according to any of the preceding features, wherein the stack is heated by means of an anode gas stream, by heat transfer of the surroundings or by means of a burner.
10. Process according to any of the preceding features, wherein the stack is heated by means of electrical heating elements in heat exchange relationship to a cathode gas stream, an anode gas stream or the surroundings of the SOFC system.
11. Process according to any of the preceding features, wherein the state of operation has a duration of at least 50 h, preferably at least 100 h, to ensure that internal metal surfaces of the stack has developed oxides which provides corrosion protection before lowering the temperature to the cold idle temperature region.

### BRIEF DESCRIPTION OF THE DRAWINGS

The invention is further illustrated by the accompanying drawing showing an example of an embodiment of the invention.

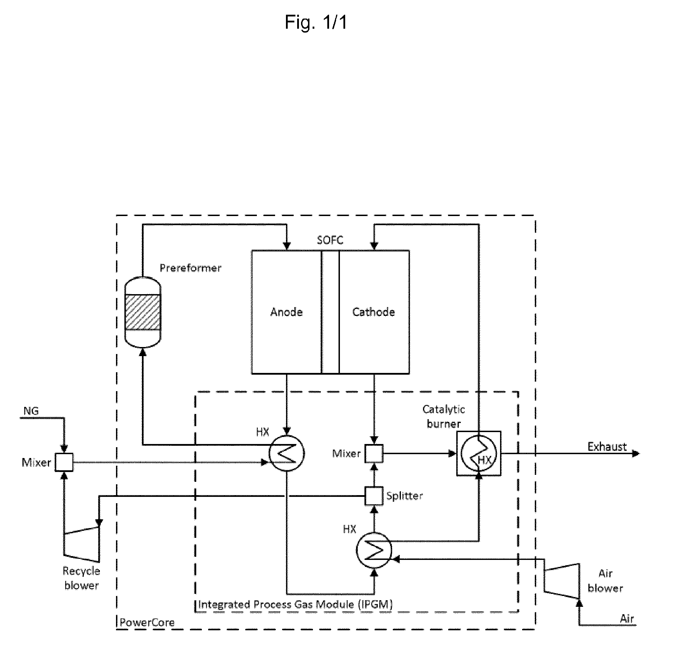

Fig. 1 shows a process diagram of an SOFC system (a PowerCore).

### DETAILED DESCRIPTION

Fig. 1 shows a process diagram of an SOFC system comprising an SOFC stack (SOFC) with an anode (Anode) and a cathode (Cathode) side of stacked fuel cells. Natural gas (NG) is mixed with recycle anode gas from the stack (to supply steam to the prereformer) in a first mixer (Mixer) before it enters the prereformer via a heat exchanger (HX) where it is heated by the anode exit gas. From the prereformer the fuel enters the anode side of the stack. When exiting the anode side of the stack, the anode side exit gas delivers heat to the anode inlet gas via a first heat exchanger (HX) and to the cathode gas via a second heat exchanger before a part of the anode exit gas is recycled as mentioned. The recycle is driven by a blower (Recycle blower). The other part of the anode exit gas is split, (in the Splitter) and enters a second mixer (Mixer) where it is mixed with cathode exit gas.

Cathode gas, in this case air (Air) is driven by a blower (Air blower) to be delivered and passed through the cathode side of the stack via the second heat exchanger (receiving heat from the anode exit gas) and a third heat exchanger where it receives heat from a catalytic burner (Catalytic burner) which is burning the mix of cathode exit gas and residual fuel in the anode exit gas.

### Example

Cold idle operation in an SOFC system was performed at two loads:
1) At an SOFC stack current of 8 A, an average stack temperature of 595°C and a resulting stack power of 484 W_{DC} corresponding to approx. 32% stack load. An efficiency from fuel to stack power of 62% (LHV) was reached, which is the same efficiency as at nominal load (25 A) and a normal average stack temperature of 724°C.
2) At an SOFC stack current of 5 A, an average stack temperature of 557°C and a resulting stack power of 297 W_{DC} corresponding to approx. 20% stack load. An efficiency from fuel to stack power of 53% (LHV) was reached because more fuel needed to be burnt in the afterburner to keep the stack at the desired temperature.

### Test setup:

The cold idle test was performed in an SOFC system called a PowerCore. The PowerCore is fuelled with natural gas (NG) and uses recycle of the anode off gas from the stack to supply steam for the pre-reformer. The air is preheated in two steps before entering the cathode. The part of the anode off gas which is not recycled is mixed with the cathode off gas and converted in a catalytic afterburner, which supplies heat for the preheating of air. The stack in the PowerCore is a 75-cell stack rated for approx. 1.5 kW of DC power at a stack current of 25 A.

### Test procedure:

Starting from a steady state and nominal operating point at 25 A and *T*_{cathode, out}=763°C, the stack current was ramped down to 8 A. The air flow was adjusted to being able to reach a steady state operating point at a reduced stack temperature. To reach and ensure steady state operation, this operating point was maintained for approx. 17 hours. At this steady state operating point, the efficiency from fuel to stack power (*η*_{DC}) and system fuel utilization (*FU*_{system} is defined as the share of inlet fuel to the system that is utilized by the stack including the anode recycle loop. All remaining fuel is converted in the afterburner) of the PowerCore could be maintained at a similar level as in nominal operation, while the oxygen utilization *(OU)* on the cathode side was increased to a defined maximum threshold of 35%. The anode recycle fraction was increased compared to nominal operation to increase the oxygen-to-carbon ratio slightly, thus operating with a larger safety margin towards carbon formation. This resulted in lower stack fuel utilization (*FU*_{stack}) compared to nominal operation. Later, the stack current was reduced even further down to 5 A. Since the defined maximum *OU* of 35% was already reached, the *FU*_{system} was decreased to supply more fuel and generate more heat in the afterburner and preheat the inlet air to a higher level, thus compensating for lower heat generation in the stack. The heat generated in the system should balance the heat loss to the surroundings to reach steady state operation. To reach and ensure steady state operation, this operating point was maintained for approx. 13 hours.

### Test conclusion:

The conclusion from the test is that the cold idle concept is technically feasible, i.e. the stack can be operated in steady state at part load and reduced temperature - making it possible to obtain the above mentioned advantages of lowering the stack operation temperature in idle or stand-by operation.

## Claims

1. Process for idling or stand-by operation of a Solid Oxide Fuel Cell (SOFC) system comprising at least one assembled (SOFC) stack comprising a plurality of solid oxide fuel cells, the process comprising the step of -
• from a state of operation, lowering the operation temperature of the SOFC stack to a cold idle temperature region below the operation temperature, wherein the cold idle temperature region is a temperature region where the SOFC system consumes sufficient power to keep the SOFC system running and the internal resistance of the stack is increased, thereby keeping the SOFC system ready for power export and lowering the fuel consumption and stack degradation rate.

2. Process according to claim 1, wherein the power load of the SOFC stack is reduced to between 10% and 30% of the operation load.

3. Process according to claim 1, wherein the power load of the SOFC stack is reduced to between 5% and 40% of the operation load.

4. Process according to claim 1, wherein the average cold idle temperature region of the stack is at least 50°C below the operation temperature, preferably at least 100°C below the operation temperature.

5. Process according to claim 1, wherein the average cold idle temperature region of the stack is between 400°C and 650°C.

6. Process according to claim 1, wherein the average cold idle temperature region of the stack is between 400°C and 600°C.

7. Process according to any of the preceding claims, wherein the average cold idle temperature region of the SOFC stack is between 550°C and 600°C and the load of the SOFC is between 20% and 40% of the operation load.

8. Process according to any of the preceding claims, wherein the SOFC system further comprises an afterburner in fluid connection to a cathode gas exiting the stack and a heat exchanger in fluid connection to the gas exiting the afterburner and in heat exchange connection to a cathode gas entering the stack, wherein said afterburner heats the cathode gas entering the stack so the stack is heated by the cathode gas entering the stack.

9. Process according to any of the preceding claims, wherein the stack is heated by means of an anode gas stream, by heat transfer of the surroundings or by means of a burner.

10. Process according to any of the preceding claims, wherein the stack is heated by means of electrical heating elements in heat exchange relationship to a cathode gas stream, an anode gas stream or the surroundings of the SOFC system.

11. Process according to any of the preceding claims, wherein the state of operation has a duration of at least 50 h, preferably at least 100 h, to ensure that internal metal surfaces of the stack has developed oxides which provides corrosion protection before lowering the temperature to the cold idle temperature region.
